# EUROPÄISCHE PATENTSCHRIFT

(11) **EP 2 076 948 B1**
(45) Veröffentlichungstag und Bekanntmachung des Hinweises auf die Patenterteilung: **07.01.2015**
(21) Anmeldenummer: 07818876.0
(22) Anmeldetag: 10.10.2007
(51) Int. Cl.: H02B 1/052

(54) **MONTAGEPLATTE MIT BEFESTIGUNGSMITTELN FÜR EIN ELEKTRISCHES GERÄT**
MOUNTING PLATE WITH FIXING MEANS FOR AN ELECTRICAL DEVICE
PLAQUE DE MONTAGE DOTÉE DE MOYENS DE FIXATION POUR UN APPAREIL ÉLECTRIQUE

(30) Priorität: 13.10.2006 DE 102006049019
(43) Veröffentlichungstag der Anmeldung: 08.07.2009
(73) Patentinhaber: Phoenix Contact GmbH & Co. KG, 32825 Blomberg (DE)
(72) Erfinder: HENKEL, Hartmut, 32825 Blomberg (DE); EUSTERHOLZ, Helmut, 33102 Paderborn (DE)
(86) Internationale Anmeldenummer: PCT/EP2007/008803
(87) Internationale Veröffentlichungsnummer: WO 2008/046545

(56) Entgegenhaltungen:
- DE-A1- 2 250 248
- DE-U1- 9 406 386
- GB-A- 2 381 132
- US-A- 5 334 054

## Beschreibung

Die Erfindung betrifft eine Montageplatte mit Befestigungsmitteln für ein elektrisches Gerät gemäß dem Oberbegriff des Anspruchs 1.

Aus der DE 2 250 248 A1 ist eine Anordnung zur Befestigung von Geräten auf Tragschienen unter Verwendung eines Federstahlblechs als Montageplatte bekannt. Dabei weist das Federstahlblech Mittel zur Befestigung des Gerätes und Mittel zur Befestigung an der Tragschiene auf. Zur Halterung des Federstahlblechs auf der Schiene sind an dem Federstahlblech hakenförmige Befestigungselemente ausgebildet, die die Kanten der Schiene umgreifen. Beim Aufsetzen des Federstahlblechs auf die Schiene wird zunächst eine Kante der Schiene in erste hakenförmige Befestigungselemente als Halter eingeschoben. Anschließend wird ein Aufschnappen des Federstahlblechs auf die Schiene über zweite federnd ausgebildete hakenförmige Befestigungselemente als Widerlager bewirkt, welche eine zweite Kante der Schiene umgreifen. Zur Bewirkung einer Rutschsicherheit sind an dem Federstahlblech zusätzlich zwei Ecken abgebogen, die sich in die Kante der Schiene krallen.

Eine Montageplatte dieser Art ist bspw. auch aus der DE 196 46 696 C1 bekannt. Solche Montageplatten sind als längliches Flachteil mit einer Vorderseite zur Befestigung von elektrischen Geräten und einer Rückseite zur Montage auf Tragschienen, insbesondere in Schaltschränken, ausgebildet.

Auf der Rückseite der Montageplatte sind an ihrem ersten längsseitigen Ende als Befestigungsmittel zur Aufnahme einer im Profil hutförmig ausgebildeten Tragschiene mit abgewinkelten Auflagerstegen hakenförmige, die Auflagerstege übergreifende, Halter mit einem Anlageabschnitt sowie wenigstens eine bei auf der Montageplatte montierter Tragschiene mit den Haltern zusammenwirkende vorstehende Erhebung aus Metall vorgesehen. An dem zweiten längsseitigem Ende der Rückseite ist ein Widerlager angeordnet. Dabei sind die Erhebung und die Halter derart aufeinander abgestimmt, dass bei montierter Tragschiene, insbesondere der DIN EN 50 022, die Erhebung den ersten Auflagersteg gegen die Anlagefläche der Halter drückt bzw. klemmt, wobei der gegenüberliegende Auflagersteg durch das Widerlager fixiert ist.

Die bekannte Montageplatte hat sich in der Praxis bewährt. Jedoch hat sich herausgestellt, dass insbesondere mit zunehmendem Gewicht der zu montierenden elektrischen Geräte und bei vertikal ausgerichteter Tragschiene das elektrische Gerät mit der Montageplatte auf der Tragschiene verrutscht.

Der Erfindung liegt ausgehend von der bekannten Montageplatte die Aufgabe zugrunde, eine Montageplatte der eingangs genannten Art zu offenbaren, mit der elektrische Geräte sicher gegen ein Verrutschen auf einer hutförmig ausgebildeten Tragschiene montiert werden können.

Diese Aufgabe wird erfindungsgemäß durch eine Montageplatte mit den Merkmalen des Anspruchs 1 gelöst. Diese Montageplatte umfasst Befestigungsmittel für ein elektrisches Gerät und für eine hutförmige, mit zwei abgewinkelten Auflagerstegen, ausgebildete Tragschiene sowie zwei auf der Rückseite der Montageplatte angeordneten Haltern mit einem Anlageabschnitt. Zusätzlich ist eine Erhebung aus Metall auf der Rückseite der Montageplatte zur Klemmung von zumindest einem der beiden abgewinkelten Auflagerstege gegen den Anlageabschnitt des Halters vorgesehen. Die Erhebung ist derart in ihrer Anordnung, Geometrie sowie ihren Abmessungen und Materialeigenschaften gewählt, dass sie sich und/oder ein mit ihr verbundener Teil der Montageplatte bei Klemmung des abgewinkelten Auflagerstegs verformt. Durch diese Verformung wird die Kontaktfläche der Erhebung zu dem Auflagersteg exakt auf seine Kontur angepasst, wobei auch nach der Verformung eine hohe Anpresskraft in Richtung des Auflagerstegs wirkt. Durch die Flächenanpassung und die weiterhin hohe Anpresskraft ist die Montageplatte mit der Tragschiene kraftschlüssig und rutschsicher verbunden. Hierdurch kann das elektrische Gerät sicher in seiner gewünschten Position im Schaltschrank gehalten werden.

Durch die Verformung wird zusätzlich der Vorteil erreicht, dass der Druck auf die Montageplatte einen zulässigen Höchstwert nicht überschreitet, bei dem die Montageplatte, insbesondere bei Vibrationen, schwingenden Belastungen oder derlg., brechen würde.

Darüber hinaus wird durch die Materialwahl der Erhebung sichergestellt, dass die Anpresskraft auch über einen längeren Zeitraum konstant bleibt, weil sich Metall über die Zeit nicht weiter verformt bzw. nicht relaxiert. Dieses wäre jedoch der Fall, wenn die Erhebung aus einem Polymerwerkstoff bestände. Ferner wird durch die Materialwahl erreicht, dass die Verformung der Erhebung und somit ihre Anpresskraft gegen den Auflagersteg in einem Temperaturbereich von bis zu 100°C fast nicht von der Temperatur beeinflusst wird. Somit sind der Anpressdruck und die Rutschsicherheit unabhängig von der im Einsatzbereich der Montageplatte vorliegenden Temperatur, welche typischerweise von - 25°C bis zu 100°C reichen.

Ferner bietet diese Materialwahl den Vorteil, dass sich auch über einen längeren Zeitraum, bspw. von Jahren, keine Verformung einstellt.

In einer weiteren besonders vorteilhaften Ausführung der Erfindung ist vorgesehen, dass die Montageplatte aus einem elektrisch leitenden Material besteht und vorzugsweise als Gussteil ausgeführt ist. Durch die Materialwahl wird bei auf der Montageplatte montiertem elektrischen Gerät und montierter Tragschiene eine durchgehende elektrische Verbindung mit geringen Übergangswiderständen von dem elektrischen Gerät zu der Tragschiene sichergestellt. Hierdurch ist eine Erdung des elektrischen Geräts über ein Masseband nicht mehr notwendig. Um die Fertigungskosten zu minimieren, ist die Montageplatte mit ihrer Erhebung einstückig ausgeführt.

In einer bevorzugten Weiterbildung der Erfindung ist vorgesehen, dass die Erhebung sich bei Klemmung des abgewinkelten Auflagerstegs mit einem Abschnitt, dessen Dicke größer als 2 mm ist, plastisch verformt. Hierdurch wird erreicht, dass die Montageplatte sowohl zur Befestigung von Hutschienen der Norm DIN EN 50 022 - 35 x 7,5 mit einer Dicke von 1 mm als auch zur Befestigung der Hutschienen der Norm DIN EN 50 022 - 35 x 15 mit einer Dicke von 2,2 mm bis 2,5 mm geeignet ist. Ist dagegen die Erhebung derart ausgestaltet, dass sie sich bereits beim Einsatz der 1 mm dicken Hutschienen DIN EN 50 022 - 35 x 7,5 wesentlich plastisch verformt, so kann durch die sich aufgrund dieser Kaltverformung einstellende erhöhte Festigkeit der Erhebung nicht gewährleistet werden, dass auch noch eine ausreichende plastische Verformung bei Einsatz der dickeren Hutschiene DIN EN 50 022 - 35 x 15 erreicht wird. Somit wird durch diese Weiterbildung der Erfindung erreicht, dass sich die Erhebung sicher plastisch verformen kann und der maximal zulässige Anpressdruck nicht überschritten wird. Demgemäß können schwere elektrische Geräte über die Montageplatte und die stabile Hutschiene DIN EN 50 022 - 35 x 15 rutschsicher im Schaltschrank gehalten werden, während leichtere elektrische Geräte über dieselbe Montageplatte an der dünneren Hutschiene EN 50 022 - 35 x 7,5 befestigt werden können.

Durch diese Weiterbildung der Erfindung ist somit eine universell einsetzbare Montageplatte geschaffen.

In einer besonderen Ausgestaltung der Erfindung ist vorgesehen, dass die Erhebung zwei Abschnitte umfasst, wobei der erste Abschnitt in Längsseitenansicht der Montageplatte unterhalb des Halters und der anschließende zweite Abschnitt der Erhebung neben dem freien Ende des Halters angeordnet sind.

Dabei wird bei montierter Tragschiene durch den ersten Abschnitt im Wesentlichen ein sehr hoher Druck zwischen dem Anlageabschnitt des Halters und der Oberseite des Auflagerstegs sowie zwischen der Unterseite des Auflagerstegs und der Kontaktfläche des ersten Abschnitts erzeugt. Dieser sehr hohe Druck bewirkt insbesondere die Verformung des ersten Abschnitts der Erhebung. Überschreitet jedoch der Druck einen zulässigen Maximalwert der durch Verformung der Erhebung nicht mehr kompensiert werden kann, so kann es zum Bruch der Montageplatte kommen. Deshalb erstreckt sich der erste Abschnitt der Erhebung, in Längsrichtung der Montageplatte betrachtet, auch nicht über die gesamte Länge des Halters. Der neben dem Halter und an dem ersten Abschnitt unmittelbar anschließende zweite Abschnitt vergrößert die Kontaktfläche zwischen der Erhebung und dem Auflagersteg. Auch hierdurch kann in vorteilhafter Weise der Widerstand gegen ein Verschieben des Auflagersteges gesteuert werden.

Weitere vorteilhafte Ausgestaltungen der Erfindung sind in den Unteransprüchen angegeben.

Die erfindungsgemäße Montageplatte ist nachfolgend in einem Ausführungsbeispiel beschrieben und zeichnerisch dargestellt. In der Zeichnung zeigen
- Fig. 1: in Perspektive die Rückseite der erfindungsgemäßen Montageplatte mit Haltern und einer Erhebung,
- Fig. 2: die Montageplatte von Fig. 1 in Längsseitenansicht mit montierter Tragschiene,

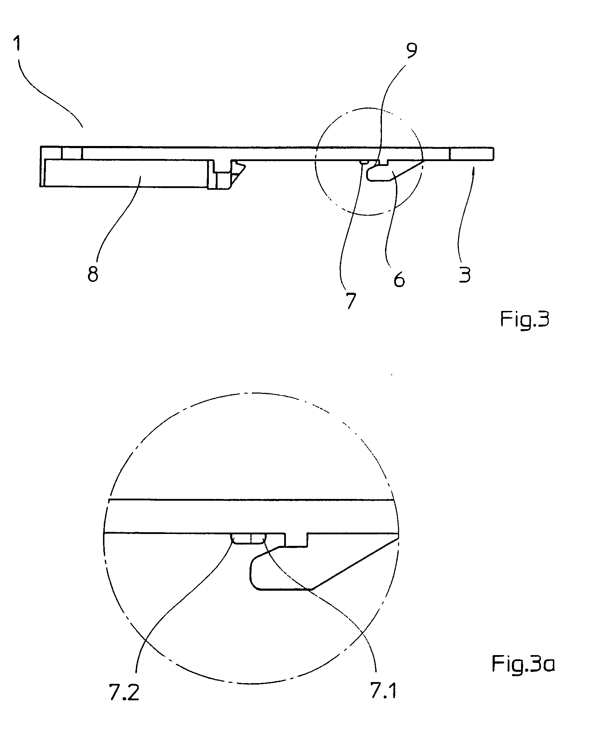

- Fig. 3: die Montageplatte von Fig. 1 u. 2 in Längsseitenansicht ohne montierte Tragschiene,
- Fig. 3a: einen vergrößerten Ausschnitt der Montageplatte von Fig. 1. u. 2 in Längsseitenansicht und
- Fig. 4: eine weitere Ausführung einer erfindungsgemäßen Montageplatte in perspektivischer Ansicht.

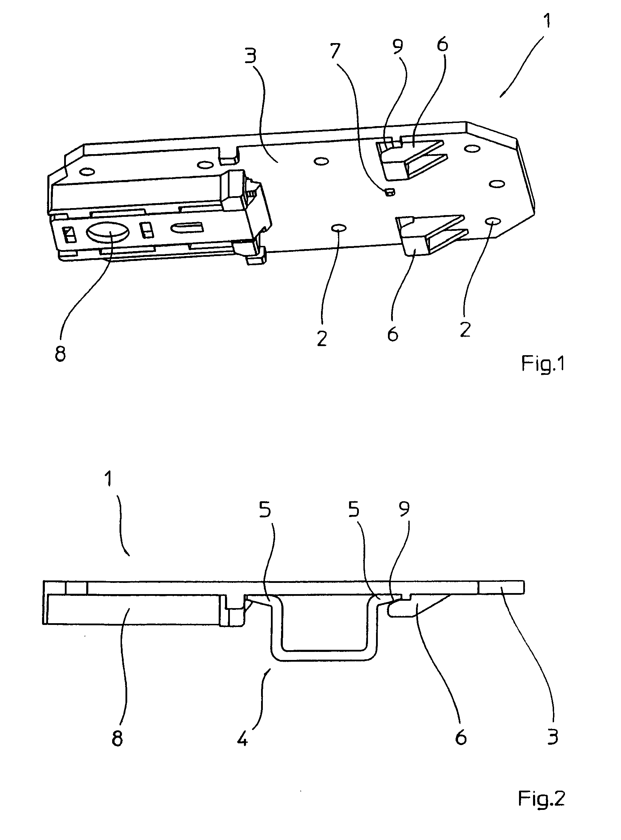

Fig. 1 zeigt in perspektivischer Ansicht eine als längliches Flachteil ausgebildete Montageplatte 1 mit Befestigungsmitteln zur Aufnahme eines nicht dargestellten elektrischen oder elektronischen Geräts. Das elektrische Gerät kann über seine Gehäuserückseite und die als Befestigungsmittel vorgesehenen Bohrungen 2 an der Vorderseite der Montageplatte 1 befestigt werden.

Auf der mit 3 bezeichneten Rückseite der Montageplatte 1 sind Befestigungsmittel zur Aufnahme von hutförmig ausgebildeten Trägerschienen 4 mit abgewinkelten Auflagerstegen 5, insbesondere der Norm DIN EN 50 022, vorgesehen. Als Befestigungsmittel sind zum ersten Ende der Rückseite hin zwei, vorzugsweise symmetrisch zur Längsachse der Montageplatte 1, angeordnete Halter 6 vorgesehen. Sie sind in Art von Haken mit innenliegenden Anlageflächen ausgebildet und zum Übergreifen von einem der beiden Auflagerstege 5 der hutförmigen Tragschiene 4 geeignet. Zur Klemmung des abgewinkelten Auflagerstegs 5 gegen die Anlagefläche der Halter 6 ist zusätzlich eine Erhebung 7 aus Metall vorgesehen.

Gegenüber den Haltern 6 ist als Widerlager ein in Längsrichtung der Montageplatte 1 verschiebbarer Riegel 8 angeordnet. Dieser wird durch Federkraft in Richtung der Halter 6 in seine in Fig. 1 dargestellte Verriegelungsstellung gedrückt.

Beim Einsatz einer hutförmigen Tragschiene 4 auf die Montageplatte 1 wird zunächst einer der beiden Auflagerstege 5 in die durch die hakenförmigen Haltern 6 und durch die Rückseite 3 gebildeten Aufnahmen eingeschoben. Als Einschubhilfe ist eine Einlaufschräge 9 auf der Innenseite der Halter 6 vorgesehen. Anschließend wird der Riegel 8 aus seiner Verriegelungsstellung in seine Entriegelungsstellung geschoben und die hutförmige Tragschiene 4 im Bereich ihres zweiten Auflagerstegs 5 gegen die Rückseite 3 der Montageplatte 1 gedrückt.

Die hierzu erforderliche Druckkraft wird auf die gegenüber der flachen Rückseite 3 hervorstehende Erhebung und auf die innenliegenden Anlageflächen der Halter 6 übertragen. Zur Fixierung dieser Befestigungsstellung wird der Riegel 8 über den Auflagersteg 5 zurück in seine Verriegelungsstellung bewegt. In dieser Befestigungsstellung wirkt die Erhebung 7 als Drehpunkt über den die Druckkraft in Richtung der innenliegenden Anlageflächen der Halter 6 geleitet wird. Die Erhebung 7 klemmt also den abgewinkelten Auflagersteg 5 gegen die Anlagefläche der Halter 6.

Die Erhebung 7 ist in ihrer Anordnung, Geometrie sowie ihren Abmessungen und Materialeigenschaften derart gewählt, dass sie sich in dieser Befestigungsstellung verformt. Durch die vorgenannten Parameter der Erhebung 7 "Anordnung, Abmessung und Geometrie" ergibt sich bei auf der Montageplatte 1 eingesetzter Tragschiene 4 eine auf die Erhebung 7, den Auflagersteg 5 und die Halter 6 wirkende Druckkraft. Die Druckkraft und die Materialeigenschaften der Erhebung sowie des Auflagerstegs und der Halter bestimmen wiederum wesentlich den Verformungsgrad der Erhebung.

Bei der Anordnung der Erhebung 7 gilt, je geringer der in Längsrichtung der Montageplatte 1 betrachtete Abstand zwischen den Haltern 6 und der Erhebung 7 ist, desto größer ist die auf die Erhebung 7 und auf die Anlageflächen der Halter 6 wirkende Druckkraft. Deshalb ist, wie aus Fig. 2 ersichtlich, die Verformung der Erhebung 7 direkt unterhalb der Halter 6 maximal. Darüber hinaus steigt die Kraft mit der Höhe der Erhebung 7 sowie mit der Größe ihrer Kontaktfläche zu dem zu verklemmenden Auflagersteg 5. Nach der vorliegenden Ausführung ist die Höhe der Erhebung 7 größer als 0,6 mm, wobei die Querschnittsfläche dieses Bereichs bzw. Kontaktfläche zu dem Auflagersteg kleiner als 5 mm², vorzugsweise zwischen 2 und 4 mm², ist.

Wie Fig. 1 zeigt, ist die Erhebung 7 in etwa mittig zur Breitseite der Montageschiene 1 angeordnet. Hierdurch wird bei montierter Tragschiene ein Moment um die Erhebung 7 und die Längsachse der Montageplatte 1 induziert, so dass ein Verkannten des Auflagerstegs 5 mit den Haltern 6 und der Erhebung 7 bewirkt und eine Verschiebung quer zur Montageplatte bzw. in Längsrichtung der Trägerschiene 4 wirksam verhindert wird.

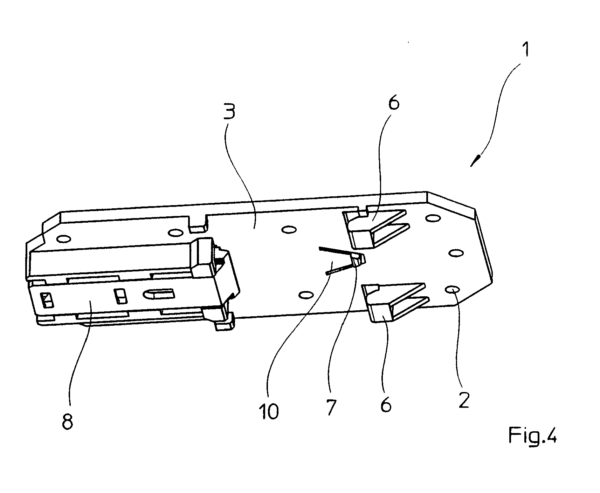

Eine zweite Ausführung der Erfindung ist in Fig. 4 gezeigt. Diese Ausführung unterscheidet sich von der vorbeschriebenen im Wesentlichen dadurch, dass sich ein mit der Erhebung verbundener Teil der Montageplatte 1 bei Klemmung des abgewinkelten Auflagerstegs (5) verformt. Dieser Teil wird durch eine in der Hauptebene der Montageplatte (1) ausgeformte Blattfeder 10 gebildet. Sie ist vorzugsweise durch V-förmige Einschnitte in der Montageplatte (1) gebildet und biegt sich bei aufgenommener Tragschiene in Richtung der Vorderseite der Montageplatte 1. Die Biegung ist vorzugsweise elastisch ausgebildet. Je nach Materialeigenschaften und Ausgestaltung der Blattfeder ist es bei montierter Tragschiene möglich, dass sich sowohl die Blattfeder 10 als auch die Erhebung 7 selbst verformt. Dies kann bspw. dadurch erreicht werden, dass die Länge der V-förmigen Einschnitte besonders kurz gewählt ist und das Material der Erhebung 7 weicher als das des Auflagerstegs 5.

Neben den vorbeschriebenen Ausführungen gibt es noch zahlreiche Möglichkeiten zur Ausführung der erfindungsgemäßen Montageplatte. So ist es bspw. auch denkbar, dass die Erhebung eine Hinterschneidung aufweist. Im Bereich der Hinterschneidung ist die Erhebung nicht so massiv ausgeführt wie der übrige Teil der Erhebung. Deshalb wird sich bei montierter Tragschiene an diesem Ort zunächst eine Verformung einstellen.

## Patentansprüche

1. Montageplatte (1) mit Befestigungsmitteln für ein elektrisches Gerät und für eine hutförmige, mit zwei abgewinkelten Auflagerstegen (5), ausgebildete Tragschiene (4) sowie mit zwei auf der Rückseite (3) der Montageplatte (1) spiegelsymmetrisch zur Längsachse der Montageplatte (1) angeordneten Haltern (6) und einem den Haltern (6) gegenüberliegenden Widerlager, wobei die Halter (6) jeweils mit einem Anlageabschnitt versehen sind, und wobei eine Erhebung (7) aus Metall auf der Rückseite (3) zur Klemmung von zumindest einem abgewinkelten Auflagersteg (5) gegen die Anlageabschnitte der Halter (6) vorgesehen ist, **dadurch gekennzeichnet**,
das Widerlager in Form eines in Längsrichtung der Montageplatte (1) verschiebbaren Riegels (8) ausgebildet ist, der durch Federkraft von einer Entriegelungsstellung in eine Verriegelungsstellung gedrückt wird,
dass die Erhebung (7) derart in ihrer Anordnung, Geometrie sowie ihren Abmessungen und Materialeigenschaften gewählt ist, dass sie sich selbst und/oder ein mit ihr verbundener Teil der Montageplatte (1) bei Klemmung des abgewinkelten Auflagerstegs (5) verformt, wobei die Erhebung in Längsrichtung der Montageplatte (1) von den Haltern (6) beabstandet ist und wobei die Erhebung etwa mittig zur Breitseite der Montageplatte (1) angeordnet ist und wobei der in Längsrichtung der Montageplatte (1) betrachtete Abstand zwischen den Haltern (6) und der Erhebung (7) kleiner ist als der in Längsrichtung der Montageplatte betrachtete Abstand zwischen dem Widerlager (8) und der Erhebung (7).

2. Montageplatte (1) nach Anspruch 1,
**dadurch gekennzeichnet,**
**dass** sich die Erhebung (7) und/oder der mit ihr verbundene Teil bei Klemmung des abgewinkelten Auflagerstegs (5) plastisch verformt.

3. Montageplatte (1) nach einem der vorgehenden Ansprüche,
**dadurch gekennzeichnet,**
**dass** sich die Erhebung (7) und/oder der mit ihr verbundene Teil bei Klemmung des abgewinkelten Auflagerstegs (5) mit einem Abschnitt, dessen Dicke größer als 2 mm ist, plastisch verformt.

4. Montageplatte (1) nach einem der vorgehenden Ansprüche,
**dadurch gekennzeichnet,**
**dass** die Montageplatte (1) und die Erhebung (7) einstückig ausgebildet sind.

5. Montageplatte (1) nach einem der vorgehenden Ansprüche,
**dadurch gekennzeichnet,**
**dass** die Erhebung (7) und/oder das mit ihr verbundene Teil als federndes Element ausgebildet ist.

6. Montageplatte nach einem der vorgehenden Ansprüche,
**dadurch gekennzeichnet,**
**dass** die Erhebung (7) eine Hinterschneidung aufweist.

7. Montageplatte (1) nach einem der vorgehenden Ansprüche,
**dadurch gekennzeichnet,**
**dass** das mit der Erhebung (7) verbundene Teil als Blattfeder (10) ausgebildet ist.

8. Montageplatte (1) nach einem der vorgehenden Ansprüche,
**dadurch gekennzeichnet,**
**dass** die Montageplatte (1) aus einem elektrisch leitendem Material besteht und vorzugsweise als Gussteil ausgeführt ist.

9. Montageplatte (1) nach einem der vorgehenden Ansprüche,
**dadurch gekennzeichnet,**
**dass** zumindest ein Bereich der Erhebung (7) höher als 0,6 mm ist, wobei die Querschnittsfläche dieses Bereichs kleiner als 5 mm² ist.

10. Montageplatte (1) nach einem der vorgehenden Ansprüche,
**dadurch gekennzeichnet,**
**dass** sie als längliches Flachteil ausgebildet ist.

## Claims

1. A mounting plate (1) with means of attachment for an electrical device and for a mounting rail (4) of top hat design, with two angled support webs (5), and with two holders (6) symmetrically arranged on the rear face (3) of the mounting plate (1) with respect to the longitudinal axis of the mounting plate (1), and an abutment located opposite the holders (6), wherein
the holders (6) are each provided with a bearing section, and wherein
a metal elevation (7) is provided on the rear face (3) for purposes of clamping at least one angled support web (5) against the bearing sections of the holders (6),
**characterised in that**,
the abutment is designed in the form of a sliding bar (8) that can be moved in the longitudinal direction of the mounting plate (1), which by means of spring force is pushed from an unlocked position into a locked position,
**in that**
the elevation (7) is selected in its arrangement, geometry, and also in its dimensions and material properties, such that it is itself deformed, and/or deforms a part of the mounting plate (1) that is connected with it, when the angled support web (5) is clamped, wherein
the elevation is spaced apart from the holders (6) in the longitudinal direction of the mounting plate (1), and wherein
the elevation is arranged approximately centrally with respect to the width of the mounting plate (1), and wherein
the distance between the holders (6) and the elevation (7), as viewed in the longitudinal direction of the mounting plate (1), is smaller than the distance between the abutment (8) and the elevation (7), as viewed in the longitudinal direction of the mounting plate.

2. The mounting plate (1) in accordance with Claim 1,
**characterised in that**,
the elevation (7), and/or the part connected with it, is plastically deformed when the angled support web (5) is clamped.

3. The mounting plate (1) in accordance with one of the preceding claims,
**characterised in that**,
the elevation (7), and/or the part connected with it, is plastically deformed when the angled support web (5) is clamped with a section, the thickness of which is greater than 2 mm.

4. The mounting plate (1) in accordance with one of the preceding claims,
**characterised in that**,
the mounting plate (1) and the elevation (7) are designed as one piece.

5. The mounting plate (1) in accordance with one of the preceding claims,
**characterised in that**,
the elevation (7), and/or the part connected with it, is designed as a sprung element.

6. The mounting plate (1) in accordance with one of the preceding claims,
**characterised in that**,
the elevation (7) has an undercut.

7. The mounting plate (1) in accordance with one of the preceding claims,
**characterised in that**,
the part connected with the elevation (7) is designed as a leaf spring (10).

8. The mounting plate (1) in accordance with one of the preceding claims,
**characterised in that**,
the mounting plate (1) consists of an electrically conducting material and is preferably embodied as a casting.

9. The mounting plate (1) in accordance with one of the preceding claims,
**characterised in that**,
at least one region of the elevation (7) is higher than 0.6 mm, wherein
the cross-sectional area of this region is smaller than 5 mm².

10. The mounting plate (1) in accordance with one of the preceding claims,
**characterised in that**,
it is designed as an oblong flat part.

## Revendications

1. Plaque de montage (1) avec des moyens de fixation pour un appareil électrique et pour un rail porteur (4) en forme de chapeau formé avec deux branches coudées de soutien (5) ainsi qu'avec deux support (6) disposés sur la face arrière (3) de la plaque de montage (1) en symétrie spéculaire à l'axe longitudinal de la plaque de montage (1) et une butée située en vis-à-vis des supports (6), les supports (6) étant respectivement munis d'une partie d'appui, et un relief (7) en métal étant prévu sur la face arrière (3) pour serrer au moins une branche coudée de soutien (5) contre les parties d'appui des supports (6), **caractérisée en ce que**
la butée est réalisée sous la forme d'un verrou (8) pouvant coulisser en direction longitudinale de la plaque de montage (1), lequel est poussé par une force élastique d'une position de déverrouillage vers une position de verrouillage,
**en ce que** le relief (7) est choisi d'une manière telle concernant sa disposition, géométrie ainsi que ses dimensions et propriétés du matériau, qu'il se déforme lui-même et/ou déforme une partie de la plaque de montage (1) qui lui est reliée lors du serrage de la branche coudée de soutien (5), le relief étant espacé des supports (6) en direction longitudinale de la plaque de montage (1) et le relief étant disposé à peu près au milieu par rapport au côté en largeur de la plaque de montage (1) et l'espacement vu en direction longitudinale de la plaque de montage (1) entre les supports (6) et le relief (7) étant plus petit que l'espacement vu en direction longitudinale de la plaque de montage entre la butée (8) et le relief (7).

2. Plaque de montage (1) selon la revendication 1, **caractérisée en ce que**
le relief (7) et/ou la partie qui lui est reliée se déforme plastiquement lors du serrage de la branche coudée de soutien (5).

3. Plaque de montage (1) selon l'une des revendications précédentes, **caractérisée en ce que**
le relief (7) et/ou la partie qui lui est reliée se déforme plastiquement lors du serrage de la branche coudée de soutien (5) avec un tronçon dont l'épaisseur est supérieure à 2 mm.

4. Plaque de montage (1) selon l'une des revendications précédentes, **caractérisée en ce que**
la plaque de montage (1) et le relief (7) sont formés d'une seule pièce.

5. Plaque de montage (1) selon l'une des revendications précédentes, **caractérisée en ce que**
le relief (7) et/ou la partie qui lui est reliée est réalisé en tant qu'élément élastique.

6. Plaque de montage (1) selon l'une des revendications précédentes, **caractérisée en ce que**
le relief (7) présente une contre-dépouille.

7. Plaque de montage (1) selon l'une des revendications précédentes, **caractérisée en ce que**
la partie reliée au relief (7) est réalisée en tant que ressort à lames (10).

8. Plaque de montage (1) selon l'une des revendications précédentes, **caractérisée en ce que**
la plaque de montage (1) se compose d'un matériau électro-conducteur et est de préférence réalisée en tant que pièce moulée.

9. Plaque de montage (1) selon l'une des revendications précédentes, **caractérisée en ce que**
au moins une zone du relief (7) est plus haute que 0,6 mm, l'aire de la section de cette zone étant inférieure à 5 mm².

10. Plaque de montage (1) selon l'une des revendications précédentes, **caractérisée en ce qu'**elle est réalisée en tant que pièce plate oblongue.
